(19) **Europäisches Patentamt**
**European Patent Office**
**Office européen des brevets**

(11) Veröffentlichungsnummer: **0 302 857**
**B1**

(12) **EUROPÄISCHE PATENTSCHRIFT**

(45) Veröffentlichungstag der Patentschrift: **06.06.90**

(51) Int. Cl.$^5$: **F 16 D 23/06**, F 16 D 9/00

(21) Anmeldenummer: **87901484.3**

(22) Anmeldetag: **11.03.87**

(86) Internationale Anmeldenummer:
**PCT/EP87/00142**

(87) Internationale Veröffentlichungsnummer:
**WO 87/05675 24.09.87 Gazette 87/21**

(54) SPERRSYNCHRONISIEREINRICHTUNG FÜR GETRIEBESCHALTUNGEN.

(30) Priorität: **21.03.86 PCt/ep86/00166**

(43) Veröffentlichungstag der Anmeldung:
**15.02.89 Patentblatt 89/07**

(45) Bekanntmachung des Hinweises auf die
Patenterteilung:
**06.06.90 Patentblatt 90/23**

(84) Benannte Vertragsstaaten:
**DE FR GB**

(56) Entgegenhaltungen:
GB-A- 648 984
GB-A- 783 771
GB-A-1 032 542
GB-A-1 195 439
US-A-4 108 424

Looman-Zahradgetriebe (
Konstruktionsbücherband 26 ) Springer-Verlag
Berlin/Heidelberg/New York 1970, Seite 259,
Abb. 10.9

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **LUTZ, Rolf
Oberwolfertsweiler 18
D-7992 Tettnang (DE)**
Erfinder: **REINALTER, Franz
Gallusstrasse 18
D-7990 Friedrichshafen (DE)**
Erfinder: **FIECHTNER, Heinz
Lichtenbergstrasse 12
D-7778 Markdorf (DE)**

(74) Vertreter: **Raue, Reimund
Zahnradfabrik Friedrichshafen AG Löwentaler
Strasse 100 Postfach 2520
D-7990 Friedrichshafen 1 (DE)**

EP 0 302 857 B1

**Beschreibung**

Die Erfindung betrifft eine Sperrsynchronisiereinrichtung nach dem Oberbegriff von Patentanspruch 1.

Aus Loomann-Zahnradgetriebe (Konstruktionsbücherband 26), Springer-Verlag Berlin/Heidelberg/New York 1970, Seite 259, Abbildung 10.9, sind Synchronisiereinrichtung bekannt, bei denen die Kuppelverzahnung der Schiebemuffe an der Sperrververzahnung des Synchronringes so lange gesperrt wird, wie zwischen dem Synchronkörper und dem Zahnrad noch kein Gleichlauf erzielt ist. Solche Einrichtungen sind für den Fahrer sehr günstig, weil sie eine relativ geringe Aufmerksamkeit in bezug auf das Schalten erfordern. Sie haben aber den nach Nachteil, daß die Reibeinrichtung infolge der vorkommenden hohen Differenzdrehzahlen und der oft aufgewendeten hohen Schaltkräfte überbelastet werden und damit schnell verschleißen und vorzeitig ganz ausfallen. Insbesondere bei Schaltungen in den Rückwärtsgang bei noch vorwärts rollendem Fahrzeug sind relativ hohe Differenzdrehzahlen zu synchronisieren, so daß die Synchronisiereinrichtungen für eine solche Schaltung besonders gefährdet sind.

Aber auch der Motor ist gefährdet, da bei einer Sperrsynchronisiereinrichtung auch bei einer noch zu schnellen Vorwärtsfahrt die Einlegung des Rückwärtsganges nicht sicher auszuschließen ist. Beim Einkuppeln kann infolge der Drehrichtungsumkehr dann der Motor beschädigt werden.

Es ist deshalb Aufabge der Erfindung, eine Synchronisiereinrichtung nach dem Oberbegriff von Patentanspruch 1 so zu gestalten, daß eine Überlastung und damit eine Zerstörung der Synchronisiereinrichtung und eine Beschädigung des Motors verhindert werden.

Diese Aufgabe wird mit den kennzeichnenden Merkmalen von Patentanspruch 1 erfüllt.

Durch die Aufhebung der Sperrwirkung auch bei noch bestehender Differenzdrehzahl zwischen den zu kuppelnden Teilen, Schiebemuffe und Zahnrad, wird mit Sicherheit eine Überlastung der Synchronisiereinrichtung verhindert. Wird dies durch die Erwärmung am Synchronring erzielt, dehnt dieser sich auf und löst sich infolge der axialen Abstützung am Zahnrad vom Reibkonus des Zahnrades. Das Reibmoment am Konus bricht zusammen, und durch die Wirkung der Entsperrkraft aus der axialen Kraft der Schiebemuffe am Sperrzahn des Synchronringes wird dieser zurückgedreht, und die Schiebemuffe kann in axialer Richtung weiter auf die Kuppelverzahnung des Zahnrades zu verschoben werden. Eine gleiche Wirkung wird auch erreicht durch die Abstimmung des Reibmomentes mit dem zu erzielenden maximalen Entsperrmoment. Ein entsprechend hohes Entsperrmoment kann also auch ohne Aufhebung des Reibmomentes dieses überwinden und den Synchronring in Umfangsrichtung zurückdrehen, so daß die Sperrzähne des Synchronringes die axiale Bewegung der Schiebemuffe nicht mehr verhindern können. Mit einer solchen Einrichtung werden normale, also zugelassene Schaltungen, auch in den Rückwärtsgang bewältigt, ohne daß eine Zerstörung der Synchronisierung durch Überbelastung möglich ist.

Ist jedoch die Vorwärtsfahrt und damit die Differenzdrehzahl zwischen Schiebemuffe und Zahnrad noch zu hoch, so entsteht beim versuchten Einspuren der Stirnverzahnung der Schiebemuffe in die Kuppelverzahnung des Zahnrades ein Ratschgeräusch, so daß der Fahrer die Schaltung nicht oder nur stark verzögert vollendet.

Damit wird verhindert, daß beim Einkuppeln des Motors infolge der Drehzahlumkehr dieser beschädigt wird.

Weitere vorteilhafte Ausgestaltungen ergeben sich nach den Ansprüchen 2 bis 5.

Durch eine geeignete Gestaltung der Stirnseiten der Kuppelverzahnung z.B. durch geeignete Abrundungen kann das Signal für den Fahrer sehr markant gestaltet werden, so daß Beschädigungen des Motor mit noch größerer Sicherheit verhindert werden. Wird die axiale Distanz zwischen Synchronring und der Stirnseite der Kuppelverzahnung sehr gering gehalt und so abgestimmt, daß die beim Synchronversuch bei zu hoher Fahrgeschwindigkeit entstehende Wärme zur Ausdehnung des Synchronringes und zum stirnseitigen Anlaufen führt, wird auch durch das Zusammenbrechen des Reibmomentes die Sperrwirkung zwischen Schiebemuffe und Sperrzahn am Synchronring aufgehoben, und die Schiebemuffe kann in axialer Richtung auf die Kuppelverzahnung des Zahnrades zu geführt werden. Sollte die Differenzdrehzahl immer noch bestehen, so ergibt sich ein Ratschgeräusch, und die Schaltung, z.B. in den Rückwärtsgang, kann noch weiter verzögert werden, bis die Differenzdrehzahl eine saubere Schaltung zuläßt.

Die Abstimmung des Entsperr- und des Reibmomentes kann durch entsprechende Gestaltung der Winkel für die Sperrflächen an der Schiebemuffe und am Synchronring—Verringerung des Entsperrmomentes—oder durch eine entsprechende Winkelgestaltung der Reibkonen bzw. deren Reibfläche—Verringerung des Reibmoments—erzielt werden.

Weitere Einzelheiten der Erfindung werden anhand der Zeichnung und anhand von Ausführungsbeispielen erläutert. Es zeigen:

Fig. 1 eine Doppelschaltkupplung mit Sperrsynchronisiereinrichtung im Schnitt;

Fig. 2 einen Teilschnitt aus Fig. 1 durch ein Zahnrad und einen Synchronring;

Fig. 3 eine schematische Darstellung der Sperrflächen der Kuppelverzahnung von Schiebemuffe und Zahnrad sowie der Sperrverzahnung am Synchronring.

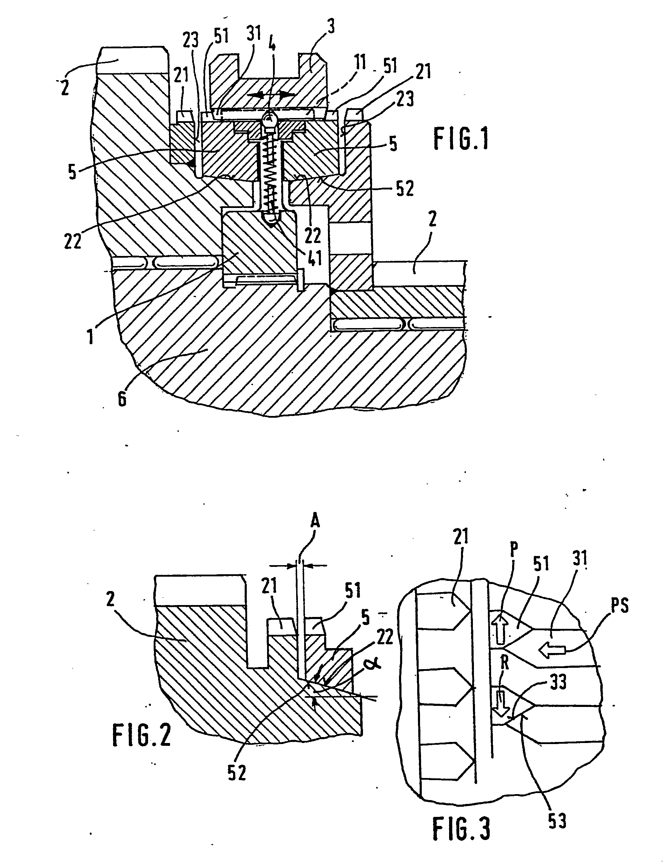

In Fig. 1 ist eine Doippelschaltkupplung mit Sperrsynchronisiereinrichtung dargestellt. Zur Vereinfachung wird jedoch nur eine Sperrsynchronisiereinrichtung in einer Schaltkupplung beschrieben. Auf einer Antriebswelle 6 ist dreh- und axialfest ein Schiebemuffenträger 1 befestigt, mit dem über eine Verzahnung 11, 31 drehfest eine Schiebemuffe 3 verbunden ist. Zwischen dem Schiebemuffenträger 1 und dem Zahnrad 2 ist noch ein Synchronring 5 mit einer konischen Reibfläche 52 angeordnet, wobei diese Reibfläche mit der Reibfläche 22 vom Zahnrad 2 zusammenwirkt. Im Schiebemuffenträger 1 sind am Umfang verteilt noch mehrere Druckbolzen 4 angeordnet, die von Druckfedern 41 nach radial außen in eine konische Aussparung der Schiebnemuffe 3 gedrückt werden, wobei der radial außenliegende Bereich ballig ausgeführt oder in bekannter Weise als Kugel ausgebildet ist. Der Synchronring 5 ist in bekannter Weise über eine Mitnahmeeinrichtung mit dem Schiebemuffenträger 1 verbunden, wobei eine Relativbewegung in Umfangsrichtung und eine axiale Bewegung möglich ist. Die dem Zahnrad 2 zugeordnete Reibfläche 22 ist direkt am Zahnrad 2 oder an einem am Zahnrad befestigten Kupplungskörper angeordnet. Das Zahnrad selbst oder der Kupplungskörper trägt noch eine Kuppelverzahnung 21, die in axialer Richtung also auf die Schiebemuffe hin angeschrägt oder abgerundet ist. Aus dem Ausschnitt nach Fig. 2 ist neben dem Zahnrad 2 noch der Synchronring 5 dargestellt. Die Reibflächen 22 und 52 von Zahnrad und Synchronring bilden die konische Reibeinrichtung mit dem Konuswinkel α. Der stirnseitige Abstand zwischen Zahnrad 2 und dem Synchronring ist mit A bezeichnet.

Die Fig. 3 zeigt in schematischer Darstellung einen Zahn 31 der Schiebemuffe 3 mit der Sperrfläche 33 und einen Sperrzahn 51 des Synchronrings 5 mit der Sperrfläche 53. Mit P ist das Entsperrmoment dargestellt, das am Sperrzahn 51 wirkt und sich aus der Schaltkraft PS, die auf die Schiebemuffe wirkt und dem Winkel der Sperrflächen 33, 53 ergibt. Das Reibmoment R wirkt in Umfangsrichtung der Entsperrkraft entgegen. Die Wirkungsweise ist wie folgt: wird die Schiebemuffe 3 in eine der angegebenen Pfeilrichtungen z.B. nach links bewegt, nimmt die Schiebemuffe den Druckbolzen 4 mit, und dieser drückt zum Ansynchronisieren auf den Synchronring, der sich geringfügig axial in gleicher Richtung wie die Schiebemuffe bewegt. Damit wird die Reibeinrichtung 52, 22 zwischen Zahnrad und Synchronring wirksam, und der Synchronring wird in Umfangsrichtung begrenzt ausgelenkt, so daß bei einer weiteren axialen Bewegung der Schiebemuffe über die Sperrzähne 51 am Synchronring und die Sperrflächen 53 und 33 nach Fig. 3 diese am weiteren axialen Verschieben gehindert wird. Die Sperrzähne 51 des Synchronringes 5 werden dabei durch das Reibmoment in dieser Sperrstellung gehalten. Während eine normale Sperrsynchronisierung in dieser Stellung so lange gehalten wird, bis Gleichlauf zwischen dem Zahnrad 2 und dem Schiebemuffenträger 1 bzw. der Schiebemuffe 3 erzielt ist, wird bei noch bestehender Differenzdrehzahl entweder das Reibmoment aufgehoben, oder das Entsperrmoment ist bei voller Wirkung der Schaltkraft PS größer als das Reibmoment, so daß über die Sperrflächen 33, 53 der Synchronring 5 zurückgedreht wird und die Schiebemuffe 3 in axialer Richtung weiterbewegt werden kann. Die Reduzierung oder Aufhebung des Reibmoment R kann erreicht werden durch eine entsprechende Dimensionierung des Synchronringes, so daß dieser bei zu hoher Differenzdrehzahl sich erwärmt und ausdehnt. Ist dabei der Spalt zwischen Zahnrad 2 und Synchronring 5 nach Fig. 2 relativ klein, so läuft der Synchronring stirnseitig am Zahnrad an und löst sich mit der Reibfläche 52 von der Reibfläche 22 des Zahnrades 2. Das Reibmoment R bricht zusammen und die Schiebemuffe 3 kann weiter in Richtung Zahnrad 2 geschoben werden. Ist die Differenzdrehzahl noch zu hoch, so kommt es beim Einspuren der Zahnköpfe von der Schiebemuffe 3 in die Kuppelverzahnung 21 des Zahnrades 2 zum Ratschen, so daß eine Absicherung gegen unerlaubtes Schalten gegeben ist, ohne daß mit dieser Methode der Fahrer in der Lage ist, die Synchronisierung zu zerstören. Das Verhältnis Entsperrmoment zu Reibmoment kann dabei noch beeinflußt werden durch den Winkel an den Sperrflächen 33, 53 der Kuppelverzahnung 31 und der Sperrverzahnung 51, weil bei einem steileren Winkel das Entsperrmoment vergrößert wird. Eine weitere Beeinflußung ist noch möglich durch Reduzierung des Reibmomentes. Dies kann erreicht werden durch die Reduzierung der Reibfläche, einmal durch ihre absolute Größe und zum anderen durch eine geeignete Profilierung. Das Reibmoment kann auch verringert werden durch einen entsprechenden Konuswinkel α von etwa 10° aufwärts, da der Konuswinkel bei einer Normalsynchronisierung bei etwa 6° liegt.

Bezugszeichen

| | |
|---|---|
| 1 | Schiebemuffenträger |
| 11 | Außenverzahnung |
| 2 | Zahnrad |
| 21 | Kuppelverzahnung |
| 22 | Reibflächen |
| 23 | Stirnseite |
| 3 | Schiebemuffe |
| 31 | Kuppelverzahnung |
| 32 | Sperrzähne |
| 33 | Sperrflächen |
| 4 | Druckbolzen |
| 41 | Druckfedern |
| 5 | Synchronring (Reibring) |
| 51 | Sperrverzahnung |
| 52 | Reibflächen |
| 53 | Sperrflächen |
| 6 | Antriebswelle |
| PS | Schaltkraft |
| P | Entsperrmoment |
| α | Konuswinkel |
| R | Reibmoment |
| A | Abstand. |

**Patentansprüche**

1. Sperrsynchronisiereinrichtung für Getriebeschaltungen, bei welcher ein Schiebemuffenträger (1) und ein mit utnerschiedlicher Drehzahl rotierendes Zahnrad (2) mit Hilfe einer axial verschiebbaren ringförmigen Schiebemuffe (3) bei Gleichlauf formschlüssig zusammengekuppelt werden, wobei eine Kuppelverzahnung (31) der Schiebemuffe (3) in je eine entsprechende Außenverzahnung (11) des Schiebemuffenträgers (1) und der Kuppelverzahnung (21) des Zahnrades (2) eingreift, mit zwischen Schiebemuffenträger (1) und Schiebemuffe (3) angeordneten Druckbolzen (4), die im nicht gekuppelten Zustand in eine Ausnehmung an der Innenseite der Schiebemuffe (3) eingreifen und Druckflächen aufweisen, die mit Druckflächen an einem Synchronring (5) in Wirkverbindung stehen, welcher axial zwischen dem Schiebemuffenträger (1) und dem Zahnrad (2) angeordnet ist und mit dem Schiebemuffenträger in beiden Umfangsrichtungen über Anschläge mit Umfangsspiel in Mitnahmeverbindung steht, wobei Teile des Zahnrades (2) mit Teilen des Synchronringes (5) gemeinsam eine kraftschlüssige Kupplung bilden (Reibflächen 22, 52) und mit Sperrzähnen (51) am Synchronring (5) zum zeitweiligen Sperren der axialen Bewegung der Schiebemuffe (3), dadurch gekennzeichnet, daß bei noch bestehender Differenzdrehzahl zwischen dem Zahnrad (2) und dem Schiebemuffenträger (1) die Sperrwirkung der Sperrzähne (51) begrenzt wird, so daß über die Kuppelverzahnung (31) der Schiebemuffe (3) bei deren Axialbewegung die Sperrzähne (51) am Synchronring (5) in Umfangsrichtung gegenüber dem Schiebemuffenträger (1) verdreht werden, wobei die Begrenzung der Sperrwirkung durch Verringerung des Reibmomentes infolge der Erwärmung des Synchronringes (5) und/oder einer geeigneten Gestaltung der Reibflächen (22, 52) und/oder einer Erhöhung der Entsperrkraft durch die Gestaltung der Sperrflächen (33, 53) erfolgt, so daß bei axialer Bewegung der Schiebemuffe (3) in Richtung auf das Zahnrad (2) bei der Berührung der beiden Kupplungsverzahnungen (31, 21) Ratschgeräusche entstehen, die den Fahrer veranlassen, den Schaltvorgang erst nach Drehzahlangleichung zu vollenden.

2. Sperrsynchronisiereinrichtung nach Anspruch 1, dadurch gekennzeichnet, daß der Synchronring (5), im Querschnitt so gestaltet ist, daß er infolge einer zu langen Reibzeit stark erwärmt und damit aufgeweitet und die Reibung an den Reibflächen (22, 52) aufgehoben wird, wobei sich der Synchronring an der Stirnseite (23) der Kupplungsverzahnung (21) abstützt.

3. Sperrsynchronisiereinrichtung nach Anspruch 1 dadurch gekennzeichnet, daß die Sperrflächen (33, 53) an den Sperrzähnen (51) von Synchronring (5) und Schiebemuffe (3) so weit angespitzt sind, daß das Entsperrmoment (P), das sich aus der Axialkraft (Schaltkraft PS) der Schaltmuffe (3) ergibt, größer ist als das Reibmoment (R) aus der Reibpaarung der Reibflächen (22, 52).

4. Sperrsynchronisiereinrichtung nach Anspruch 1, dadurch gekennzeichnet, daß die Reibflächen (22, 52) zwischen Synchronring (5) und Zahnrad (2) durch ihren Konuswinkel oder durch ihre Profilierung eine reibwertsenkende Gestaltung aufweisen.

5. Sperrsynchronisiereinrichtung nach Anspruch 1 dadurch gekennzeichnet, daß der Konuswinkel (α) der Reibflächen (22, 52) besonders groß, also deutlich größer als 6° ist.

**Revendications**

1. Dispositif de synchronisation à verrouillage pour changements de vitesses, dans lequel un support (1) de manchon coulissant et un pignon (2) tournant à des vitesses différentes sont couplés positivement l'un à l'autre, quand le synchronisme est réalisé à l'aide d'un manchon annulaire coulissant axialement (3), par engagement d'une denture de couplage (31) du manchon (3) dans une denture extérieure correspondante (11) dudit support (1) et dans la denture de couplage (21) du pignon (2), le dispositif comportant des poussoirs (4) disposés entre le support (1) et le manchon (3) et engagés dans un évidement de la face intérieure du manchon (3) dans la position non couplée, les poussoirs comportant des surfaces d'appui qui coopèrent avec des surfaces d'appui sur une bague de synchronisation (5), laquelle se trouve axialement entre ledit support (1) et le pignon (2) et est reliée au support par une liaison d'entraînement dans les deux sens de rotation au moyen de butées laissant du jeu de rotation, et dans lequel des parties du pignon (2) forment un embrayage à friction (surface de friction 22, 52) avec des parties de la bague de synchronisation (5), et comportant des dents de verrouillage (51) sur la bague de synchronisation (5) pour verrouiller temporairement le déplacement axial du manchon (3), caractérisé en ce que, lorsqu'il subsiste encore une différence de vitesse de rotation entre le pignon (2) et le support (1) de manchon coulissant, l'effet de verrouillage des dents dè verrouillage (51) est limité, de sorte que la denture de couplage (31) du manchon (3) fait tourner les dents de verrouillage (51) de ladite bague (5) par rapport audit support (1) quand le manchon se déplace, la limitation de l'effet de verrouillage étant créée par réduction du moment de friction à la suite de l'échauffement de la bague de synchronisation (5) et/ou par une conception appropriée des surfaces de friction (22, 52) et/ou par une augmentation de la force de déverrouillage en raison de la conception des surfaces de verrouillage (33, 53), de sorte que des bruits de cliquetis sont produits par le contact entre les dentures de couplage (31, 21) du manchon (3) et du pignon (2) lors d'un déplacement axial du manchon en direction du pignon et incitent le conducteur à n'achever le changement de vitesses qu'après égalisation des vitesses de rotation.

2. Dispositif selon la revendication 1, caractérisé en ce que la bague de synchronisation (5) a une section transversale agencée de telle façon que, à la suite d'une trop grande durée de friction, la bague s'échauffe et que la friction sur les surfaces de friction (22, 52) disparaît, la bague s'appuyant alors contre la face frontale (23) de la denture de couplage (21).

3. Dispositif selon la revendication 1, caractérisé en ce que les surfaces de verrouillage (33, 53) ménagées sur les dents de verrouillage (51) de la bague de synchronisation (5) et du manchon (3) sont disposées suffisamment en biais pour que le moment de déverrouillage (P) résultant de la poussée axiale (force d'enclenchement PS) du manchon (3) soit plus grand que le moment de friction (R) transmis entre les paires de surfaces de friction (22, 52).

4. Dispositif selon la revendication 1, caractérisé en ce que les surfaces (22, 52) de friction entre la bague de synchronisation (5) et le pignon (2) présentent un coefficient de friction réduit, grâce à leur angle de conicité ou grâce à leur forme profilée.

5. Dispositif selon la revendication 1, caractérisé en ce que l'angle de conicité ($\alpha$) des surfaces de friction (22, 52) est particulièrement grand, à savoir nettement plus grand que 6°.

**Claims**

1. Locking synchronizing device for gearshift systems, in which a sliding sleeve support (1) and a gearwheel (2), which rotates at a different speed, are positively coupled together when in synchronism by means of an axially displaceable annular sliding sleeve (3), a synchro-mesh tooth system (31) of the sliding sleeve (3) meshing with a respective external tooth system (11) of the sliding sleeve support (1) and the synchro-mesh tooth system (21) of the gearwheel (2), with thrust bolts (4), which are arranged between the sliding sleeve support (1) and the sliding sleeve (3), engage in the uncoupled state in a recess at the inside of the sliding sleeve (3) and comprise thrust surfaces which are operatively connected to thrust surfaces on a synchronizing ring (5), which is arranged axially between the sliding sleeve support (1) and the gearwheel (2) and is connected with circumferential play via dogs to the sliding sleeve support so as to be driven in both circumferential directions, parts of the gearwheel (2) forming with parts of the synchronizing ring (5) a frictional coupling (friction surfaces 22, 52), and with locking teeth (51) on the synchronizing ring (5) for temporarily stopping the axial movement of the sliding sleeve (3), characterised in that, if there is still a speed differential between the gearwheel (2) and the sliding sleeve support (1), the locking effect of the locking teeth (51) is limited, so that when the sliding sleeve (3) moves axially the locking teeth (51) on the synchronizing ring (5) are turned in the circumferential direction with respect to the sliding sleeve support (1) by the synchro-mesh tooth system (31) of the sliding sleeve (3), the locking effect being limited by a reduction in the frictional moment due to the synchronizing ring (5) heating up and/or an appropriate form of the friction surfaces (22, 52) and/or an increase in the unlocking force due to the form of the friction surfaces (33, 53), so that when the sliding sleeve (3) moves axially in the direction of the gearwheel (2) the contact between the two synchro-mesh tooth systems (31, 21) gives rise to chattering noises which cause the driver to refrain from completing the gearshift operation until the speeds are equal.

2. Locking synchronizing device according to claim 1, characterised in that the cross section of the synchronizing ring (5) is formed such that it heats up considerably as a result of an excessive friction period and thus expands and the friction at the friction surfaces (22, 52) is counteracted, the synchronizing ring being supported at the face (23) of the synchro-mesh tooth system (21).

3. Locking synchronizing device according to claim 1, characterised in that the locking surfaces (33, 53) at the locking teeth (51) of the synchronizing ring (5) and the sliding sleeve (3) are pointed to an extent such that the unlocking moment (P), which results from the axial force (shift force PS) of the operating sleeve (3), is greater than the frictional moment (R) from the friction pairing of the friction surfaces (22, 52).

4. Locking synchronizing device according to claim 1, characterised in that the friction surfaces (22, 52) between the synchronizing ring (5) and the gearwheel (2) are of a form, due to their cone angle or profiling, which reduces the coefficient of friction.

5. Locking synchronizing device according to claim 1, characterised in that the cone angle ($\alpha$) of the friction surfaces (22, 52) is particularly large, i.e. distinctly greater than 6°.

FIG.1

FIG.2

FIG.3